# EUROPÄISCHE PATENTSCHRIFT

(11) **EP 2 279 606 B1**
(45) Veröffentlichungstag und Bekanntmachung des Hinweises auf die Patenterteilung: **10.05.2017**
(21) Anmeldenummer: 08758641.8
(22) Anmeldetag: 20.05.2008
(51) Int. Cl.: H04M 1/725

(54) **BASISSTATION, EXTERNER SCHALTER UND VERFAHREN ZUR DEZENTRALEN STEUERUNG VON FUNKBASIERTEN DRAHTLOSEN KOMMUNIKATIONSNETZWERKEN SOWIE ZUGEHÖRIGES KOMMUNIKATIONSSYSTEM UND COMPUTER-PROGRAMM-PRODUKT**
BASE STATION, EXTERNAL SWITCH AND METHOD FOR THE REMOTE CONTROL OF RADIO-BASED CORDLESS COMMUNICATION NETWORKS AND ASSOCIATED COMMUNICATION SYSTEM AND COMPUTER PROGRAM PRODUCT
STATION DE BASE, COMMUTATEUR EXTERNE ET PROCÉDÉ DE COMMANDE DÉCENTRALISÉE DE RÉSEAUX DE COMMUNICATION SANS FIL, SYSTÈME DE COMMUNICATION CORRESPONDANT ET PRODUIT DE PROGRAMME INFORMATIQUE

(43) Veröffentlichungstag der Anmeldung: 02.02.2011
(73) Patentinhaber: Gigaset Communications GmbH, 40549 Düsseldorf (DE)
(72) Erfinder: KAMPERSCHROER, Erich, 46499 Hamminkeln (DE); LUNGWITZ, Matthias, 46397 Bocholt (DE)
(74) Vertreter: Michalski Hüttermann & Partner Patentanwälte mbB
(86) Internationale Anmeldenummer: PCT/EP2008/004031
(87) Internationale Veröffentlichungsnummer: WO 2009/140975

(56) Entgegenhaltungen:
- EP-A- 0 785 660
- WO-A-00/75900
- WO-A2-02/09363
- GB-A- 2 245 453
- US-A- 5 745 849
- US-A1- 2007 161 372

## Beschreibung

Die vorliegende Erfindung bezieht sich auf eine Vorrichtung und ein Verfahren zur dezentralen Steuerung von funkbasierten drahtlosen Kommunikationsnetzwerken sowie ein zugehöriges Kommunikationssystem, Computer-Programm-Produkt und insbesondere auf eine Vorrichtung und ein Verfahren zur benutzerfreundlichen Steuerung von DECT-oder CAT-iqN -Kommunikationsnetzwerken.

Im Rahmen der Weiterentwicklung von funkbasierten drahtlosen Kommunikationsnetzwerken hin zu einer vereinfachten Bedienbarkeit der Geräte durch den Nutzer werden zukünftig neue Anforderungen an die Funknetzwerke gestellt. Unter funkbasierten Kommunikationsnetzwerken werden nachfolgend insbesondere Funknetzwerke gemäß dem DECT-Standard oder CAT-iqN -Standard beschrieben.

Derartige Funknetzwerke sollen insbesondere eine vereinfachte Bedienbarkeit der Basisstationen sowie ihrer Mobilteile durch den Nutzer gegenüber den bisherigen Systemen ermöglichen. Ferner sollen neuartige Gerätekategorien ermöglicht werden und die eigentliche Komplexität der umfangreichen Funknetzwerke vor dem Nutzer verborgen werden.

Diese Anforderungen sollen beispielsweise in einem modifizierten DECT-Standard (Digital European Cordless Telecommunications) und insbesondere in dem neuen Industriestandard CAT-iqN (Cordless Advanced Technology -internet and quality) umgesetzt werden.

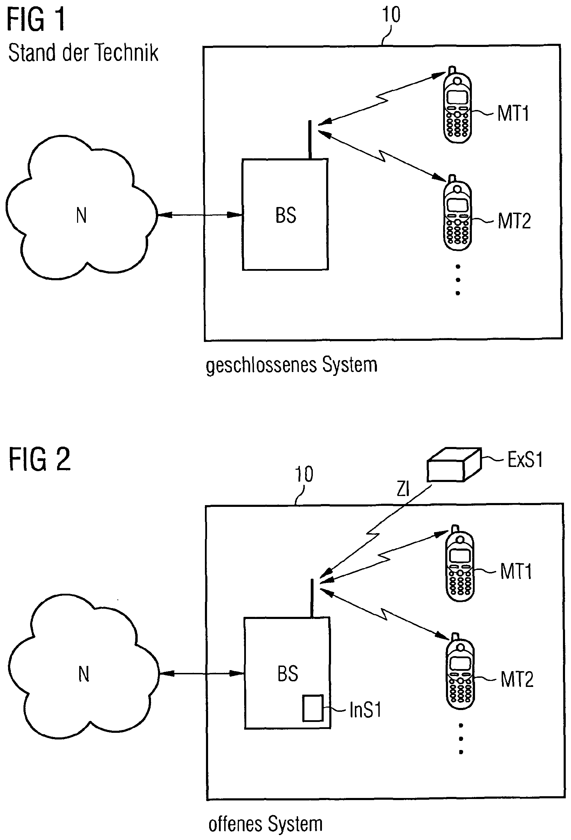

Figur 1 zeigt ein vereinfachtes Diagramm zur Veranschaulichung eines funkbasierten Kommunikationsnetzwerkes gemäß dem Stand der Technik. Gemäß Figur 1 realisiert das herkömmliche funkbasierten Kommunikationsnetzwerk 10 ein geschlossenes System, welches beispielsweise den DECT-Standard (Digital European Cordless Telecommunications) erfüllt. Eine Basisstation BS, welche eine Vermittlungseinheit des funkbasierten Kommunikationsnetzwerkes darstellt, ist beispielsweise über eine Funkschnittstelle mit einer Vielzahl von mobilen Endgeräten wie zum Beispiel mobilen Telefonen bzw. Mobilteilen MT1 und MT2 verbunden. Die Mobilteile MT1 und MT2 müssen hierbei an der Basisstation BS angemeldet sein, um beispielsweise eine interne Verbindung oder eine externe Verbindung über ein an die Basisstation BS angeschaltetes Netzwerk N zu ermöglichen.

Grundsätzlich ermöglicht ein derartiges geschlossenes Kommumkationssystem bereits eine Vielzahl von Steuerungsfunktionen. Möchte beispielsweise ein Benutzer nicht durch einen einkommenden Anruf (Ruftonsignalisierung) gestört werden, was beispielsweise im Büro-Umfeld bei einer Besprechung der Fall ist und zur Hause beispielsweise dann der Fall ist, wenn der Benutzer schlafen geht und während der Nachtruhe nicht gestört werden will, so bietet bereits das geschlossene System gemäß Figur 1 hierfür eine Möglichkeit, die Signalisierung einkommender Rufe zu unterdrücken. Im Siemens Gigaset kann der Benutzer beispielsweise mittels eines an der Basisstation BS angemeldeten Mobilteils MT1 durch eine Prozedur in einem Untermenü die Basisstation BS in einen "Nicht-Signalisierungsmodus" schalten. In der Praxis macht der Benutzer dies jedoch selten oder gar nicht, da die dafür durchzuführende Prozedur umständlich und schwierig ist. Dies gilt in gleicher Weise für die Abschaltung bzw, Deaktivierung einer derartigen Ruftonsignalisierungs-Sperre.

Die internationale Patentanmeldung WO 00/75900 A1 beschreibt ein drahtloses programmierbares Sicherheits-/Alarmsystem. Eine Hauptsteuereinheit ist mit Peripheriegeräten verbunden. Die Peripheriegeräte können ein bestimmtes Ereignis detektieren und dadurch in der Hautsteuereinheit eine bestimmte Aktion auslösen. Die US-Patent-Anmeldung US 2007/0161372 A1 beschreibt die Verwendung eines Funktelefonsystems, umfassend eine Basisstation und mehrere Mobilteile, als Alarmanlage.

Der Erfindung liegt daher die Aufgabe zu Grunde, eine Vorrichtung und ein Verfahren zur dezentralen Steuerung von funkbasierten drahtlosen Kommunikationsnetzwerken sowie ein zugehöriges Kommunikationssystem, und ein Computer-Programm-Produkt zu schaffen, welches eine Benutzerfreundlichkeit erhöht und intuitiv sowie einfach zu bedienen ist.

Erfindungsgemäß wird diese Aufgabe Hinsichtlich des Verfahrens durch die Maßnahmen des Patentanspruchs 1 gelöst. Hinsichtlich der vermittlungsseitigen Vorrichtung wird diese Aufgabe durch die Merkmale des Patentanspruchs 6 gelöst. Hinsichtlich der endgeräteseitigen Vorrichtung wird diese Aufgabe durch die Merkmale des Patentanspruchs 10 gelöst. Hinsichtlich des Computer-Programm-Produkts wird diese Aufgabe durch die Maßnahmen des Patentanspruchs 14 gelöst. Hinsichtlich des Kommunikationssystems wird diese Aufgabe durch die Maßnahmen des Patentanspruchs 15 gelöst.

Die vorbestimmten Funktionen des Kommunikationsnetzwerkes können beispielsweise endgeräte-bezogene Funktionen umfassen, die insbesondere ein Ein-/Ausschalten einer Ruftonsignalisierung, eines Anklopfens, einer Alarmmeldung und/oder einer Weckfunktion betreffen. Ferner können die vorbestimmten Funktionen auch vermittlungs-bezogene Funktionen umfassen, die insbesondere einen Verbindungsaufbau zu einer vorbestimmten Rufnummer ermöglichen. Auf diese Weise lassen sich komplexe Steuerungen der verschiedenen Geräte des Kommunikationsnetzwerkes benutzerfreundlich durchführen.

Beispielsweise kann ein Zustandswechsel im externen Schalter von einem Sensor gesteuert werden, wodurch sich weitere Anwendungsmöglichkeiten insbesondere in Verbindung mit einer vermittlungs-bezogenen Funktionalität ergeben wie beispielsweise die Realisierung von Alarmanlagen mit Rauchmeldern, Bewegungsmeldern oder Türkontakten.

In den weiteren Ansprüchen sind weitere vorteilhafte Ausgestaltungen der Erfindung gekennzeichnet.

Die Erfindung wird nachstehend anhand von Ausführungsbeispielen unter Bezugnahme auf die Zeichnung im Einzelnen beschrieben.

Es zeigen:
Figur 1 ein vereinfachtes Blockdiagramm eines funkbasierten Kommunikationsnetzwerkes gemäß dem Stand der Technik;
Figur 2 ein vereinfachtes Blockdiagramm eines funkbasierten drahtlosen Kommunikationsnetzwerkes gemäß einem Ausführungsbeispiel der vorliegenden Erfindung;
Figur 3 ein vereinfachtes Zustandsdiagramm des Ausführungsbeispiels gemäß Figur 2 zur Veranschaulichung wesentlicher Verfahrensschritte; und
Figur 4 ein vereinfachtes Blockdiagramm der Basisstation und des externen Schalters gemäß einem weiteren Ausführungsbeispiel der vorliegenden Erfindung.

Figur 2 zeigt ein vereinfachtes Blockdiagramm eines funkbasierten drahtlosen Kommunikationsnetzwerkes gemäß einem Ausführungsbeispiel der vorliegenden Erfindung, wobei gleiche Bezugszeichen gleiche oder entsprechende Elemente bezeichnen wie in Figur 1. Gemäß Figur 2 wird ein offenes Kommunikationssystem realisiert, welches zusätzlich zu dem (herkömmlichen) geschlossenen funkbasierten Kommunikationsnetzwerk 10 gemäß Figur 1 nunmehr ein weiteres Endgerät bzw. einen externen Schalter ExS1 verwalten kann.

Das funkbasierte Kommunikationsnetzwerk 10 kann wiederum eine Basisstation BS als Vermittlungseinheit sowie daran angeschlossene Endgeräte bzw. Mobilteile MT1, MT2 usw. aufweisen, welche mit der Basisstation BS über eine Funkschnittstelle in Verbindung stehen. Die Funkschnittstelle kann beispielsweise gemäß DECT-Standard (Digital European Cordless Telecommunications) oder CAT-iq™ -Standard (Cordless Advanced Technology - internet and quality) realisiert sein. Die Basisstation BS kann ferner an ein weiteres Netzwerk N angeschaltet sein, welches beispielsweise ein öffentliches leitungsvermitteltes oder paketvermitteltes Kommunikationsnetzwerk darstellt. In gleicher Weise kann das Netzwerk N auch ein übergeordnetes privates Netzwerk darstellen, in welches das funkbasierte Kommunikationsnetzwerk 10 eingebunden wird. In gleicher Weise können eine Vielzahl von Basisstationen im funkbasierten Kommunikationsnetzwerk 10 vorhanden und miteinander verbunden sein.

Die Basisstation BS realisiert eine Vermittlungsfunktion und kann daher auch als Vermittlungseinheit bezeichnet werden. Genauer gesagt kann die Basisstation entweder interne Gespräche zwischen den Mobilteilen MT1, MT2, ... untereinander (intern Anrufe) oder eine Vermittlung zu nicht gezeigten Teilnehmern über das externe Netzwerk N durchschalten.

Gemäß Figur 2 kann der externe Schalter ExS1 als intuitiv bedienbares Schaltgerät ausgestaltet sein, um so eine benutzerfreundliche Steuerung des funkbasierten Kommunikationsnetzwerkes 10 weiter zu verbessern. Beispielsweise kann der externe Schalter ExS1 die Form eines Würfels aufweisen, an dessen sechs Flächen verschiedene Symbole für jeweilige Schaltzustände von Funktionen des funkbasierten Kommunikationsnetzwerkes dargestellt sind.

Die Erfindung sei nachfolgend beispielhaft anhand einer Schalthandlung "eingehende Rufe signalisieren bzw. nicht signalisieren" beschrieben, wobei sie nicht darauf beschränkt ist und in gleicher Weise auch andere Schalthandlungen umfassen kann. Gemäß Figur 2 kann der als Würfel ausgestaltete externe Schalter ExS1 beispielsweise eine grüne Seite und eine rote Seite aufweisen, wobei ein eingehender Ruf aus dem Netzwerk N nicht signalisiert werden soll, wenn die rote Seite des Würfels oben liegt und ein eingehender Ruf signalisiert werden soll, wenn die grüne Seite des Würfels oben liegt. Aus Sicht der Basisstation führt demzufolge eine Lageveränderung des Würfels den gleichen Schaltvorgang aus wie die eingangs beschriebene komplexe Prozedur, ist jedoch aus Sicht des Benutzers intuitiv und einfach zu benutzen.

Gemäß Figur 2 kann zur Realisierung dieser vereinfachten Benutzerführung in der Basisstation BS ein interner Schalter InS1 vorgesehen sein, der einer bestimmten Funktionalität wie zum Beispiel der vorstehend beschriebenen Schalthandlung "eingehende Rufe signalisieren bzw. nicht signalisieren" zugeordnet ist und ferner mit dem externen Schalter ExS1 logisch verknüpft ist. Der externe Schalter ExS1 kann somit über eine unidirektionale Verbindung seine Zustandsinformation ZI an die Basisstation BS übertragen, welche dem internen Schalter InS1 unmittelbar zugeordnet wird und somit die ausgewählte Funktionalität ein- oder ausschaltet.

Vorzugsweise kann der externe Schalter ExS1 die für das funkbasierte Kommunikationssystem verwendeten Funkschnittstelleneinheiten als Sende/Empfangseinheiten aufweisen, wodurch sich die Kosten für eine Realisierung wesentlich reduzieren lassen. Die Funkschnittstelleneinheit kann demzufolge z.B. eine DECT- oder CAT-iq^{™} - Sende/Empfangseinheiten aufweisen. Die Erfindung realisiert somit ein offenes Kommunikationssystem, bei dem nunmehr ein externes nicht primär zum Schnurlossystem gehörendes Gerät wie beispielsweise der externe Schalter bzw. Würfel ExS1 eine Schalthandlung im funkbasierten Kommunikationsnetzwerk 10 auslösen kann, die einer vorbestimmten Funktionalität des Netzwerkes zugeordnet ist.

Vorzugsweise wird erst bei der Erkennung eines Zustandswechsels im externen Schalter ExS1 die Verbindung mit der Basisstation BS aufgenommen, wodurch sich ein geringer Energiebedarf ergibt und insbesondere batteriebetriebene externe Geräte mit hohen Standzeiten ermöglicht werden können.

Während demzufolge das herkömmliche System gemäß Figur 1 als ein geschlossenes Kommunikationssystem betrachtet werden kann, bei dem das Mobilteil MT1 über eine festgelegte Interaktionslogik und entsprechende Zugriffsberechtigungen entsprechende Systemschalter betätigen kann, wird das erfindungsgemäße System nunmehr als offenes Kommunikationssystem realisiert, bei dem beispielsweise über das nachfolgend beschriebene Verfahren der externe Schalter ExS1 mit dem internen Schalter InS1 assoziiert wird und eine benutzerfreundliche und intuitive Schalthandlung ermöglicht.

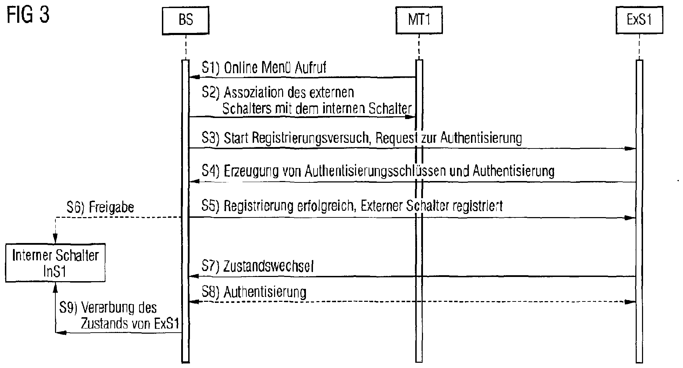

Figur 3 zeigt ein vereinfachtes Zustandsdiagramm zur Veranschaulichung wesentlicher Verfahrensschritte der vorliegenden Erfindung.

Gemäß Figur 3 kann in den Schritten S1 und S2 zunächst eine Verknüpfung bzw. Assoziation zwischen dem externen Schalter ExS1 und dem internen Schalter InS1 der Basisstation BS hergestellt werden, wobei der interne Schalter InS1 einer vorbestimmten Funktionalität im Kommunikationsnetzwerk 10 zugeordnet ist und diese freigibt. Die vorbestimmte Funktion bzw. Funktionalität kann beispielsweise eine endgeräte-bezogene Funktion sein und umfasst insbesondere ein Ein-/Ausschalten der vorstehend beschriebenen Ruftonsignalisierung. Ferner kann jedoch auch die Funktion eines "Anklopfens" oder eine "Weckfunktion" für ein vorbestimmtes Mobilteil ein- oder ausgeschaltet werden. Ferner kann die vorbestimmte Funktion auch eine vermittlungs-bezogene Funktion umfassen, wobei insbesondere ein Verbindungsaufbau zu einer vorbestimmten Rufnummer aktiviert oder deaktiviert wird. In diesem Falle können der externe Schalter ExS1, sofern mit einem entsprechenden Sensor ausgestattet, auch als Feuermelder, Einbruchsmelder usw. verwendet werden, bei dessen Aktivierung z.B. eine Rufnummer der Feuerwehr oder eines Wachdienstes automatisch angerufen wird.

Das Herstellen der Verknüpfung kann in einem Schritt S1 beispielsweise durch einen Online-Menüaufruf über ein funkbasiertes Endgerät bzw. Mobilteil MT1 in der Basisstation BS durchgeführt werden. Hierbei können bereits vorbekannte Menüprozeduren für bestimmte Funktionalitäten derart erweitert werden, dass sie einen weiteren Menüpunkt zur Realisierung einer Verknüpfung zwischen einem externen und internen Schalter aufweisen und intuitiv vom Benutzer zu bedienen sind. Für die vorstehend beschriebene Ruftonsignalisierung könnte demzufolge neben den bereits existierenden Auswahlmöglichkeiten "EIN", "AUS" die Auswahlmöglichkeit "ExS1" angeboten werden. Nach erfolgreicher Verknüpfung kann in einem Schritt S2 dies dem Eingabegerät (z.B. Mobilteil MT1) bestätigt werden.

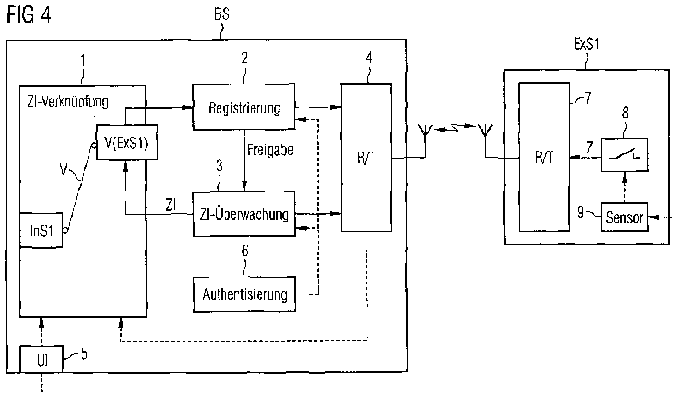

Alternativ kann das Herstellen der Verknüpfung auch durch eine nicht dargestellte Benutzerkonfiguration über eine in Figur 4 dargestellte Benutzerschnittstelle 5 durchgeführt werden, welche sich zusätzlich in der Basisstation BS befinden kann. Eine derartige Benutzerschnittstelle 5 bietet beispielsweise die Möglichkeit einer werkseitigen Vorkonfiguration der Basisstation, wenn das Produkt z.B. als "Paket" bestehend aus einer Basisstation, einem Mobilteil sowie einem externen Schalter auf den Markt gebracht wird. Die Benutzerschnittstelle 5 kann darüber hinaus eine Tastatur oder ein PC-Interface aufweisen, wodurch unmittelbar an der Basisstation eine Konfiguration bzw. Herstellung der Verknüpfung zwischen internem und externem Schalter realisiert werden kann. Selbstverständlich sind auch weitere Benutzerschnittstellen denkbar wie beispielsweise Infrarot, Bluetooth usw.

Gemäß Figur 3 kann in einem weiteren Verfahrensschritt S3 bis S5 eine Registrierung des externen Schalters ExS1 im Kommunikationsnetzwerk 10 durchgeführt werden. Hierbei kann in einem Schritt S3 die Basisstation BS einen Registrierungsversuch des externen Schalters ExS1 starten und optional in einem Schritt S4 eine Authentisierung des externen Schalters ExS1 anfordern. Sofern eine derartige optionale Authentisierung angefordert wurde, können in dem Schritt S4 vom externen Schalter ExS1 eine oder mehrere Authentisierungsschlüsse erzeugt und eine Authentisierung durchgeführt werden. Beispielsweise kann bei dieser Authentisierung die Überprüfung von Kennungen sowie eine verschlüsselte Übertragung durchgeführt werden. Sofern die Registrierung bzw. Anmeldung an der Basisstation BS erfolgreich ist, kann in einem Schritt S5 dies dem externen Schalter ExS1 mitgeteilt werden.

Optional kann in einem Schritt S6 ferner eine Freigabe des internen Schalters InS1 für einen nachfolgenden Zustandswechsel bzw. eine Vererbung des Zustands bzw. der Zustandsinformation ZI vom externen Schalter ExS1 zum internen Schalter InS1 durchgeführt werden. Der Verfahrensschritt S6 wird demzufolge nur nach erfolgreicher Registrierung und optionaler erfüllter Authentisierung freigegeben.

In den Schritten S7 bis S9 wird gemäß Figur 3 nunmehr eine Überwachung des registrierten externen Schalters ExS1 durchgeführt, wobei ein Zustandswechsel im externen Schalter ExS1 zu einem Zustandswechsel im entsprechend verknüpften internen Schalter InS1 führt. Genauer gesagt kann in einem Schritt S7 ein Zustandswechsel vom externen Schalter ExS1 der Basisstation BS angezeigt werden, was in einem Schritt S9 zu einer Vererbung bzw. Weiterleitung des Zustandswechsels an den internen Schalter InS1 führt. Entsprechend der übermittelten Zustandsinformation kann dann eine jeweils zugeordnete Funktionalität ein- oder ausgeschaltet werden.

Optional kann in einem Schritt S8 wiederum eine Authentisierung des externen Schalters ExS1 auch für jeden Zustandswechsel durchgeführt werden, wodurch sich die Sicherheit des Systems weiter erhöhen lässt und eine Beeinflussung des Kommunikationsnetzwerkes 10 durch nicht autorisierte externe Schalter zuverlässig vermieden wird. Die Authentisierung gemäß Schritt S8 wird in üblicher Weise und insbesondere gemäß Schritt S4 durch Erzeugung von Authentisierungsschlüssen und einer entsprechenden erfolgreichen Authentisierung durchgeführt.

Wenn der externe Schalter ExS1 somit seinen Status verändert (zum Beispiel der Würfel einen Wechsel von der grünen auf die rote Seite und umgekehrt durchführt), kann der externe Schalter einen Verbindungsaufbau zur Basisstation BS durchführen und den Schalterzustand bzw. die Zustandsinformation ZI des externen Schalters ExS1 auf den internen Schalter InS1 der Basisstation BS vererben, wodurch die entsprechend zugeordnete Funktionalität ein- oder ausgeschaltet wird. Nach Ausführung des Zustandswechsels im internen Schalter InS1 kann die Basisstation BS an den externen Schalter ExS1 eine Bestätigung senden und der externe Schalter ExS1 beendet die Übertragung der Zustandsinformation (nicht dargestellt). Auf diese Weise erhält man einen definierten Abschluss für die Übermittlung des Zustandswechsels, wodurch sich eine Zuverlässigkeit des Systems erhöhen und ein Energiebedarf des externen Schalters weiter verringern lässt.

Figur 4 zeigt ein vereinfachtes Blockdiagramm der Basisstation BS sowie des externen Schalters ExS1 gemäß einem weiteren Ausführungsbeispiel der vorliegenden Erfindung. Gemäß Figur 4 weist die Basisstation BS eine Sende-/Empfangseinheit 4 auf, welche beispielsweise gemäß dem DECT-Standard oder dem CATiq^{™} -Standard eine Funkschnittstelle realisiert. In gleicher Weise kann der externe Schalter ExS1 eine Sende-/Empfangseinheit 7 aufweisen, die wiederum eine entsprechende Funkschnittstelle gemäß DECT- oder CAT-iq™ -Standard ermöglicht. Die Sende-/Empfangseinheiten 4 und 7 können beispielsweise durch eine DECT-/CAT-iq^{™} -Protokollmaschine realisiert werden, wie sie bereits im Mobilteil MT1 oder MT2 sowie der Basisstation BS von herkömmlichen Systemen gemäß Figur 1 verwendet wird, weshalb auf eine detaillierte Beschreibung nachfolgend verzichtet wird. Die Kosten für das erfindungsgemäße System können dadurch wesentlich verringert werden.

Gemäß Figur 4 weist die Basisstation BS ferner eine Verknüpfungseinheit 1 zum Herstellen einer Zustands-Verknüpfung V zwischen dem externen Schalter ExS1 und dem internen Schalter InS1 auf, wobei der interne Schalter InS1 eine vorbestimmte Funktion im Kommunikationsnetzwerk 10 und insbesondere in der Basisstation BS freigibt. Beispielsweise kann der interne Schalter InS1 durch einen Speicherbereich zum Speichern der Zustandsinformation ZI realisiert sein, der über die Verknüpfung V einem verknüpften Speicherbereich V(ExSl) zugeordnet ist, der die Zustandsinformation ZI des externen Schalters ExS1 enthält.

Die Basisstation BS enthält gemäß Figur 4 ferner eine Registrierungseinheit 2, welche ein Registrieren des externen Schalters ExS1 zum Kommunikationsnetzwerk 10 und insbesondere in der Basisstation über die Sende-/Empfangseinheit 4 ermöglicht. Diese Registrierung kann beispielsweise an den Anmeldevorgang der herkömmlichen Mobilteile MT1 und MT2 angelehnt sein, wobei durch gleichzeitiges Betätigen von nicht dargestellten Schaltern an Basisstation BS und externem Schalter ExS1 eine Anmeldung erfolgt und somit der externe Schalter ExS1 an der Basisstation BS akzeptiert wird. Wiederum kann hierbei auch eine Authentisierung zur Erhöhung einer Sicherheit durchgeführt werden, welche durch die in Figur 4 gezeigte Authentisierungseinheit 6 ermöglicht wird und wiederum einer bereits bekannten Authentisierung entsprechen kann, wie sie auch beim Anmelden von Mobilteilen an einer Basisstation in herkömmlichen Funknetzwerken durchgeführt wird.

Nach erfolgreicher Registrierung des externen Schalters bzw. zugehörigen Geräts (Würfel) kann durch ein Freigabesignal eine Überwachungseinheit 3 von der Registrierungseinheit 2 freigegeben, wodurch eine Überwachung des registrierten externen Schalters ExS1 über die Sende-/Empfangseinheit 4 nunmehr grundsätzlich möglich ist. Hierbei wird ein Zustandswechsel im externen Schalter ExS1 erkannt und die entsprechende Zustandsinformation ZI in den verknüpften zugehörigen Speicherbereich V(ExSl) der Verknüpfungseinheit 1 eingetragen, welche wiederum ihrerseits über die Verknüpfung V den internen Schalter InS1 entsprechend dieser Zustandsinformation ZI aktualisiert und die zugehörige Funktionalität entsprechend ein- oder ausschaltet. Demzufolge führt ein Zustandswechsel im externen Schalter ExS1 zu einem Zustandswechsel im internen Schalter InS1 der Basisstation BS.

Wiederum kann auch für die Überwachung der Zustandsinformation ZI bzw. eine jeweilige Übertragung eines Zustandswechsels eine neben- oder übergeordnete Authentisierung über die Authentisierungseinheit 6 durchgeführt werden, wodurch eine Sicherheit sowie Zuverlässigkeit des Gesamtsystems wesentlich verbessert wird. Demzufolge kann für jeden Zustandswechsel des externen Schalter ExS1 eine Authentisierungsüberprüfung des externen Schalters ExS1 stattfinden und nur bei erfolgreicher Authentisierung der Zustandswechsel bzw. die Zustandsinformation ZI an den internen Schalter InS1 weitergeleitet werden.

Gemäß Figur 4 ist ferner die Benutzerschnittstelle 5 (User Interface, UI) dargestellt, über die die Verknüpfungseinheit 1 zum Herstellen der gewünschten Verknüpfung unmittelbar konfigurierbar ist. Wie bereits vorstehend beschrieben wurde, kann diese Verknüpfung jedoch auch über die Funkschnittstelle mittels eines nicht dargestellten Mobilteils realisiert werden, wobei die Sende-/Empfangseinheit 4 ihrerseits die Verknüpfungseinheit 1 mittelbar konfiguriert (gestrichelte Linie von Sende-/Empfangseinheit 4 zur Verknüpfungseinheit 1).

Obwohl die Verknüpfungseinheit, Registrierungseinheit sowie Überwachungseinheit vorzugsweise in der Basisstation BS angeordnet sind, können sie grundsätzlich auch außerhalb der Basisstation im Funknetzwerk 10 angeordnet sein.

Gemäß Figur 4 kann der externe Schalter ExS1 zumindest ein Schaltelement 8 zum Erzeugen der Zustandsinformation ZI aufweisen, welche über die Sende-/Empfangseinheit 7 an die Basisstation BS übermittelt wird. Der externe Schalter ExS1 ist vorzugsweise derart ausgestaltet, dass er nur dann einen Verbindungsaufbau zur Basisstation BS herstellt und die Zustandsinformation ZI überträgt, wenn ein Zustandswechsel im Schaltelement 8 stattfindet. Auf diese Weise können ein Energieverbrauch wesentlich reduziert und die Standzeiten des externen Schalters erheblich verbessert werden. Der externe Schalter ExS1 nutzt hierbei bereits bekannte Aktivierungsprozeduren der Funkschnittstelle, wobei er sich üblicherweise in einem Schlafmodus (sleep mode) befinden kann und nur bei einem Zustandswechsel auf die Funkschnittstelle synchronisiert. Ferner kann der externe Schalter ExS1 einen Sensor 9 für zumindest jedes Schaltelement 8 aufweisen, wodurch sich die unterschiedlichsten Anwendungsfälle realisieren lassen. Beispielsweise kann der Sensor 9 einen Rauchsensor aufweisen, wodurch der externe Schalter ExS1 auch als Feuermelder verwendet werden kann. Ferner kann der Sensor 9 einen Bewegungssensor und/oder Türkontakt aufweisen, wodurch der externe Schalter ExS1 als Teil einer Alarmanlage verwendet werden kann. Ferner kann der Sensor 9 einen Lagesensor aufweisen, wodurch die vorstehend beschriebene Ausführungsform eines als Würfel ausgestalteten externen Schalters realisiert werden kann. Selbstverständlich sind eine Vielzahl von weiteren Sensoren in gleicher Weise denkbar.

Insbesondere kann der funkbasierte externe Schalter ExS1 würfelförmig ausgestaltet sein und lediglich die in Figur 4 dargestellten Elemente enthalten, wobei die Sende-/Empfangseinheit 7 eine reduzierte Version einer Sende-/Empfangseinheit eines herkömmlichen Mobilteils aufweist und somit besonders kostengünstig ist.
Die Erfindung bezieht sich ferner auf ein Kommunikationssystem gemäß Figur 2, in dem die in Figur 3 dargestellten Verfahrensschritte durchgeführt werden.

Ferner bezieht sich die vorliegende Erfindung auf ein Computer-Programm-Produkt mit auf einen maschinenlesbaren Träger gespeichertem Programmcode zur Durchführung des vorstehend beschriebenen Verfahrens, wenn das Produkt auf zumindest einem Rechner bzw. einer Datenverarbeitungseinheit in der Basisstation BS und dem externen Schalter ExS1 abläuft.

Die Erfindung wurde vorstehend anhand eines funkbasierten drahtlosen Kommunikationsnetzwerkes gemäß DECT- oder CAT-iq™ -Standard beschrieben. Sie ist jedoch nicht darauf beschränkt und umfasst in gleicher Weise auch alternative funkbasierte Kommunikationsnetzwerke, welche ein offenes Kommunikationssystem ermöglichen. Ferner wurde die Erfindung beispielhaft für einen externen Schalter beschrieben, der einem internen Schalter zugeordnet wird. Selbstverständlich können auch eine Vielzahl von internen Schaltern über eine Vielzahl von externen Schaltern und/oder über einen externen Schalter mit einer Vielzahl von Schaltelementen entsprechend gesteuert werden.
In gleicher Weise kann auch eine Reihenfolge der Verfahrensschritte vertauscht sein und insbesondere können die Registrierungsschritte vor den Verknüpfungsschritten durchgeführt werden.

### Bezugszeichenliste

- 1: Verknüpfungseinheit
- 2: Registrierungseinheit
- 3: Überwachungseinheit
- 4: Vermittlungsseitige Sende-/Empfangseinheit
- 5: Benutzerschnittstelle
- 6: Authentisierungseinheit
- 7: Endgeräteseitige Sende-/Empfangseinheit
- 8: Schaltelement
- 9: Sensor
- 10: Kommunikationsnetzwerk (funkbasiert)
- ZI: Zustandsinformation
- BS: Basisstation
- ExS1: externer Schalter
- InS1: interner Schalter
- V: Verknüpfung
- MT1, MT2: Mobilteile
- N: externes Netzwerk

## Patentansprüche

1. Verfahren zur dezentralen Steuerung von funkbasierten drahtlosen Kommunikationsnetzwerken mit den Schritten:
Herstellen einer Verknüpfung (V) zwischen einem externen
Schalter (ExS1) und einem internen Schalter (InS1) einer Basisstation (BS), der im Kommunikationsnetzwerk eine endgerät-bezogene Funktion oder eine Basisstation-bezogene Funktion freigibt; Registrierung des externen Schalter (ExS1) im Kommunikationsnetzwerk; und Durchführung einer Überwachung des registrierten externen Schalters (ExS1), wobei ein Zustandswechsel im externen Schalter zu einem Zustandswechsel im entsprechend verknüpften internen Schalter (InS1) führt,
**dadurch gekennzeichnet, dass**
nur bei einem zustandswechsel des externen Schalters (ExS1) eine Verbindung zum Kommunikationsnetzwerk aufgebaut wird und sowohl die Registrierung des externen Schalters (ExS1) als auch die Weiterleitung eines jeweiligen Zustandswechsels von einer Authentisierung begleitet werden.

2. Verfahren nach Patentanspruch 1, wobei die endgerät-bezogene Funktion ein Ein-/Ausschalten einer Ruftonsignalisierung, eines Anklopfens oder einer Weckfunktion umfasst.

3. Verfahren nach Patentanspruch 1, wobei die Basisstationbezogene Funktion einen Verbindungsaufbau zu einer vorbestimmten Rufnummer umfasst.

4. Verfahren nach einem der Patentansprüche 1 bis 3, wobei der Zustandswechsel im externen Schalter (ExS1) von einem Sensor (9) gesteuert wird.

5. Verfahren nach einem der Patentansprüche 1 bis 4, wobei das funkbasierte drahtlosen Kommunikationsnetzwerk gemäß DECT-Standard oder CAT-iq™ -Standard realisiert ist.

6. Basisstation (BS) zur dezentralen Steuerung von funkbasierten drahtlosen Kommunikationsnetzwerken mit einer Verknüpfungseinheit (1) zum Herstellen einer Verknüpfung (V) zwischen einem externen Schalter (ExS1) und einem internen Schalter (InS1) der Basisstation (BS), der im Kommunikationsnetzwerk eine endgeräte-bezogene Funktion oder eine Basisstation-bezogene Funktion freigibt;
einer Registrierungseinheit (2) zum Registrieren des externen Schalters (ExS1) im Kommunikationsnetzwerk über eine Sende-/Empfangseinheit (4); und
eine Überwachungseinheit (3) zum Durchführen einer Überwachung des registrierten externen Schalters (ExS1) über die Sende-/Empfangseinheit (4), wobei ein Zustandswechsel im externen Schalter (ExS1) zu einem Zustandswechsel im internen Schalter (InS1) führt,
**dadurch gekennzeichnet, dass**
die Vorrichtung nur bei einem Zustandswechsel des externen Schalters (ExS1) eine Verbindung zu dem externen Schalter (ExS1) aufgebaut wird und die Vorrichtung eine Authentisierungseinheit (6) zum Durchführen einer Authentisierung des externen Schalters (ExS1) aufweist, die eine Authentisierung für jede Registrierung und jeden Zustandswechsel durchführt.

7. Basisstation nach Patentanspruch 6, wobei die endgeräte-bezogene Funktion ein Ein-/Ausschalten einer Ruftonsignalisierung, eines Anklopfens, einer Alarmmeldung oder einer Weckfunktion umfasst.

8. Basisstation nach Patentanspruch 6 oder 7, wobei die Basisstation -bezogene Funktion einen Verbindungsaufbau zu einer vorbestimmten Rufnummer umfasst.

9. Basistation nach einem der Patentansprüche 6 bis 8, wobei die Sende-/Empfangseinheit (4) gemäß DECT-Standard oder CAT-iq™-Standard realisiert ist.

10. Externer Schalter (ExS1) zur dezentralen Steuerung von funkbasierten drahtlosen Kommunikationsnetzwerken mit zumindest einem Schaltelement (8) zum Erzeugen von zumindest einer zugehörigen zustandsinformation (ZI) und einer Sende-/Empfangseinheit (7) zum Ermöglichen eines Verbindungsaufbaus zu einer Basisstation (BS) in dem funkbasierten drahtlosen Kommunikationsnetzwerk (10),
**dadurch gekennzeichnet, dass**
erst bei einem Zustandswechsel des zumindest einem Schaltelements (8) ein Verbindungsaufbau durchgeführt und die Zustandsinformation (ZI) gesendet wird, wobei für jeden Zustandswechsel des Schaltelements (8) des externen Schalters (ExS1) eine Authentisierungsüberprüfung des externen Schalters (ExS1) stattfindet und nur bei erfolgreicher Authentisierung die Zustandsinformation (ZI) an einen internen Schalter (InS1) der Basisstation (BS) in dem Kommunikationsnetzwerk weitergeleitet wird.

11. Externer Schalter nach Patentanspruch 10, wobei zumindest einen Sensor (9) das zumindest eine Schaltelement (B) ansteuert.

12. Externen Schalter nach Patentanspruch 11, wobei der Sensor (9) einen Rauchsensor, Bewegungssensor, Lagesensor oder Türkontakt aufweist.

13. Externen Schalter nach einem der Patentansprüche 10 bis 12, wobei die Sende-/Empfangseinheit (7) gemäß DECT-Standard oder CAT-iq™-Standard realisiert ist.

14. Computer-Programm-Produkt mit auf einem maschinenlesbaren Träger gespeicherten Programmcode zur Durchführung des Verfahrens nach einem der Patentansprüche 1 bis 5, wenn das Programmprodukt auf zumindest einer Datenverarbeitungseinheit in einer Basisstation (BS) und einem externen Schalter (ExS1) abläuft.

15. Drahtloses Kommunikationssystem mit einer Basisstation (BS) nach einem der Patentansprüche 6 bis 9 und einem externen Schalter (ExS1) nach einem der Patentansprüche 10 bis 13.

## Claims

1. Method for locally controlling radio-based wireless communication networks, having the steps of:
set-up of a link (V) between an external switch (ExS1) and an internal switch (InS1) of a base station (BS), which internal switch enables a terminal-based function of a base-station-based function in the communication network; registration of the external switch (ExS1) in the communication network; and performance of monitoring of the registered external switch (ExS1), wherein a change of state in the external switch leads to a change of state in the accordingly linked internal switch (InS1),
**characterized in that**
only a change of state of the external switch (ExS1) prompts a connection to the communication network to be set up and both the registering of the external switch (ExS1) and the forwarding of a respective change of state are accompanied by an authentication.

2. Method according to Patent Claim 1, wherein the terminal-based function comprises ringing tone signalling, call waiting or a wake function being switched on/off.

3. Method according to Patent Claim 1, wherein the base-station-based function comprises connection set-up to a predetermined telephone number.

4. Method according to one of Patent Claims 1 to 3, wherein the change of state in the external switch (ExS1) is controlled by a sensor (9).

5. Method according to one of Patent Claims 1 to 4, wherein the radio-based wireless communication network is implemented in accordance with the DECT standard or CAT-iq^{™} standard.

6. Base station (BS) for locally controlling radio-based wireless communication networks having a link unit (1) for setting up a link (V) between an external switch (ExS1) and an internal switch (InS1) of the base station (BS), which internal switch enables a terminal-based function or a base-station-based function in the communication network;
a registration unit (2) for registering the external switch (ExS1) in the communication network using a transmission/reception unit (4); and
a monitoring unit (3) for performing monitoring of the registered external switch (ExS1) using the transmission/reception unit (4), wherein a change of state in the external switch (ExS1) leads to a change of state in the internal switch (InS1),
**characterized in that**
the apparatus only a change of state of the external switch (ExS1) prompts a connection to the external switch (ExS1) to be set up
and the apparatus has an authentication unit (6) for performing authentication of the external switch (ExS1), which authentication unit performs an authentication for each registration and each change of state.

7. Base station according to Patent Claim 6, wherein the terminal-based function comprises ringing tone signalling, call waiting, an alarm signal or a wake function being switched on/off.

8. Base station according to Patent Claim 6 or 7, wherein the base-station-based function comprises connection set-up to a predetermined telephone number.

9. Base station according to one of Patent Claims 6 to 8, wherein the transmission/reception unit (4) is implemented in accordance with the DECT standard or CAT-iq^{™} standard.

10. External switch (ExS1) for locally controlling radio-based wireless communication networks having at least one switching element (8) for producing at least one associated piece of state information (ZI) and a transmission/reception unit (7) for allowing connection set-up to a base station (BS) in the radio-based wireless communication network (10),
**characterized in that**
only a change of state of the at least one switching element (8) prompts connection set-up to be performed and the piece of state information (ZI) to be sent, wherein for each change of state of the switching element (8) of the external switch (ExS1), an authentication check on the external switch (ExS1) takes place and
only successful authentication prompts a piece of state information (ZI) to be forwarded to an internal switch (InS1) of the base station (BS) in the communication network.

11. External switch according to Patent Claim 10, wherein at least one sensor (9) actuates the at least one switching element (8).

12. External switch according to Patent Claim 11, wherein the sensor (9) has a smoke sensor, motion sensor, position sensor or door contact.

13. External switch according to one of Patent Claims 10 to 12, wherein the transmission/reception unit (7) in implemented in accordance with the DECT standard or CAT-iq^{™} standard.

14. Computer program product having program code stored on a machine-readable storage medium for performing the method according to one of Patent Claims 1 to 5 when the program product runs on at least one data processing unit in a base station (BS) and an external switch (ExS1).

15. Wireless communication system having a base station (BS) according to one of Claims 6 to 9 and an external switch (ExS1) according to one of Patent Claims 10 to 13.

## Revendications

1. Procédé de commande décentralisée de réseaux de communication sans fil à base radio comportant les étapes consistant à :
créer une combinaison (V) entre un commutateur externe (ExS1) et un commutateur interne (InS1) d'une station de base (BS) qui déclenche une fonction liée au terminal ou une fonction liée à la station de base sur le réseau de communication ; enregistrer le commutateur externe (ExS1) sur le réseau de communication ; et
effectuer une surveillance du commutateur externe (ExS1) enregistré, dans lequel un changement d'état dans le commutateur externe conduit à un changement d'état dans le commutateur interne (InS1) combiné correspondant,
**caractérisé en ce qu'**une connexion au réseau de communication n'est établie que lors d'un changement d'état du commutateur externe (ExS1) et **en ce que** l'enregistrement du commutateur externe (ExS1) et la retransmission d'un changement d'état respectif s'accompagnent tous deux d'une authentification.

2. Procédé selon la revendication 1, dans lequel la fonction liée au terminal comprend une activation/désactivation d'une signalisation de tonalité d'appel, d'un appel en attente ou d'une fonction de réveil.

3. Procédé selon la revendication 1, dans lequel la fonction liée à la station de base comprend l'établissement d'une connexion à un numéro d'appel prédéterminé.

4. Procédé selon l'une quelconque des revendications 1 à 3, dans lequel le changement d'état dans le commutateur externe (ExS1) est commandé par un capteur (9).

5. Procédé selon l'une quelconque des revendications 1 à 4, dans lequel le réseau de communication sans fil à base radio dst réalisé conformément à la norme DECT ou à la norme CAT-iq^{™}.

6. Station de base (BS) destinée à la commande décentralisée de réseaux de communication sans fil à base radio comportant une unité de combinaison (1) destinée à créer une combinaison (V) entre un commutateur externe (ExS1) et un commutateur interne (InS1) de la station de base (BS), qui déclenche sur le réseau de communication une fonction liée au terminal ou une fonction liée à la station de base ;
une unité d'enregistrement (2) destinée à enregistrer le commutateur externe (ExS1) sur le réseau de communication par l'intermédiaire d'une unité d'émission/réception (4) ; et
une unité de surveillance (3) destinée à effectuer une surveillance du commutateur externe (ExS1) enregistré par l'intermédiaire de l'unité d'émission/réception (4), dans lequel un changement d'état dans le commutateur externe (ExS1) conduit à un changement d'état dans le commutateur interne (InS1),
**caractérisé en ce que** le dispositif une connexion au commutateur externe (ExS1) n'est établie que lors d'un changement d'état du commutateur externe (ExS1),
et le dispositif comprend une unité d'authentification (6) destinée à effectuer une authentification du commutateur externe (ExS1), laquelle unité d'authentification effectue une authentification pour chaque enregistrement et chaque changement d'état.

7. Station de base selon la revendication 6, dans laquelle la fonction liée au terminal comprend une activation/désactivation d'une signalisation de tonalité d'appel, d'un appel en attente, d'un message d'alarme et d'une fonction de réveil.

8. Station de base selon la revendication 6 ou 7, dans laquelle la fonction liée à la station de base comprend l'établissement d'une connexion à un numéro d'appel prédéterminé.

9. Station de base selon l'un quelconque des revendications 6 à 8, **caractérisée en ce que** l'unité d'émission/réception (4) est réalisée conformément à la norme DECT ou à la norme CAT-iq^{™}.

10. Commutateur externe (ExS1) destiné à la commande décentralisée de réseaux de communication sans fil à base radio comportant au moins un élément de commutation (8) destiné à générer au moins une information d'état correspondante (ZI) et une unité d'émission/réception (7) destinée à permettre l'établissement d'une connexion à une station de base (BS) sur le réseau de communication sans fil à base radio (10),
**caractérisé en ce que** l'établissement d'une connexion n'est effectué et l'information d'état (ZI) n'est envoyée que lors d'un changement d'état de l'au moins un élément de commutation (8), dans lequel, pour chaque changement d'état de l'élément de commutation (8) du commutateur externe (ExS1), il se produit un test d'authentification du commutateur externe (ExS1) et l'information d'état (ZI) n'est retransmise au commutateur interne (InS1) de la station de base (BS) sur le réseau de communication que lorsque l'authentification réussit.

11. Commutateur externe selon la revendication 10, dans lequel au moins un capteur (9) commande l'au moins un élément de commutation (8).

12. Commutateur externe selon la revendication 11, dans lequel le capteur (9) comprend un capteur de fumée, un capteur de mouvement, un capteur de position ou un contact de porte.

13. Commutateur externe selon l'une quelconque des revendications 10 à 12, dans lequel l'unité d'émission/réception (7) est réalisée conformément à la norme DECT ou à la norme CAT-iq^{™}.

14. Produit de programme d'ordinateur comportant un code de programme stocké sur un support lisible par ordinateur, destiné à mettre en oeuvre le procédé selon l'une quelconque des revendications 1 à 5 lorsque le produit de programme est exécuté sur au moins une unité de traitement de données dans une station de base (BS) et un commutateur externe (ExS1)

15. Système de communication sans fil comportant une station de base (BS) selon l'une quelconque des revendications 6 à 9 et un commutateur externe (ExS1) selon l'une quelconque des revendications 10 à 13.
